# EUROPÄISCHE PATENTANMELDUNG

(11) **EP 3 236 674 A1**
(43) Veröffentlichungstag der Anmeldung: **25.10.2017**
(21) Anmeldenummer: 16166062.6
(22) Anmeldetag: 19.04.2016
(51) Int. Cl.: H04R 25/00, G06F 21/00

(54) **HÖRGERÄT MIT PUBLIC-KEY SICHERHEITSFUNKTIONEN SOWIE DIVERSE SYSTEME UMFASSEND EIN SOLCHES**

(71) Anmelder: Sonova AG, 8712 Stäfa (CH)
(72) Erfinder: GEHRING, Stephan, 8713 Uerikon (CH); PERELS, David, 8005 Zürich (CH); WESSEL, Thomas, 8708 Männedorf (CH); MAKSYAGIN, Alexander, 8123 Ebmatingen (CH); KRUEGER, Harald, 8910 Affoltern am Albis (CH)

(57) **Zusammenfassung**

Ein Hörgerät (1) mit einem Mikrofon (2), einem Signalprozessor (4) und einem Hörer (3) wird mit Public-Key Sicherheitsfunktionen ausgestattet. Ein sogenanntes Trusted Platform Module enthält einen Kryptoprozessor (7), einen Zufallsgenerator (10) sowie einen geschützten Speicher (8) für private Schlüssel (9), welcher nur vom Kryptoprozessor (7), nicht hingegen vom Hauptprozessor (5) gelesen werden kann. Der öffentliche Schlüssel (13) des Gerätes, der öffentliche Schlüssel (14) eines Hörgeräteherstellers und ein Betriebssystem (15) befinden sich in einem versiegelten Speicherbereich (12) eines nicht-flüchtigen Speichers (11). Das Hörgerät (1) ist selbst gut gegen Hacker geschützt. Es kann für Sicherheitsanwendungen wie verschlüsseltes Telefonieren, sicheren Datenaustausch sowie zur Authentisierung gegenüber Geräten und Diensten verwendet werden. Es kann durch eine Public-Key Infrastruktur ergänzt werden.

## Beschreibung

### Technisches Gebiet

Die Erfindung betrifft das Gebiet Hörgeräte. Insbesondere betrifft es ein Hörgerät gemäss dem Oberbegriff von Anspruch 1, ein Public-Key System gemäss dem Oberbegriff von Anspruch 12, ein Kommunikationssystem zum verschlüsselten Telefonieren gemäss Oberbegriff von Anspruch 13, ein Kommunikationssystem zum verschlüsselten Austausch von Daten gemäss Oberbegriff von Anspruch 14, ein Computersystem gemäss Oberbegriff von Anspruch 15.

### Stand der Technik

Ein Hörgerät ist ein zumeist am Ohr getragenes Gerät, welches dazu ausgestaltet ist den Hörverlust eines schwerhörigen Menschen zu kompensieren. Es gibt verschiedene Bauformen, so zum Beispiel Hinter-dem-Ohr-Geräte, In-dem-Ohr-Geräte und zumindest teilweise implantierte Geräte.

Bei einer asymmetrischen Verschlüsselung kommen sogenannte Schlüsselpaare zum Einsatz, welche aus einem öffentlichen und einem privaten Schlüssel bestehen. Mit dem öffentlichen Schlüssel (Public Key) verschlüsselte Daten können nur mit dem privaten Schlüssel (Private Key) wieder entschlüsselt werden.

Ein "Trusted Platform Module" oder TPM ist ein Sicherheitsmodul für Computer. Es gibt dazu verschiedene Standards, zum Beispiel TPM 1.2 und TPM 2.0.

In verschiedenen Patentpublikationen aus dem Bereich Hörgeräte wird die Verwendung eines öffentlichen Schlüssels erwähnt:

Die EP 2 804 401 A1 von Pedersen et al. offenbart ein System, bei dem das Hörgerät den öffentlichen Schlüssel eines Beschallungssystems (PA/Broadcast) speichert. So kann sichergestellt werden, dass dem Hörgerätebenutzer nur Schalle von autorisierten Beschallungssystemen präsentiert werden.

Die US 2014 / 211973 von Wang et al. offenbart eine Kommunikation zwischen Hörgerät und Smartphone. In beiden Geräten ist ein privater und ein öffentlicher Schlüssel gespeichert. Die Geräte können sich so gegenseitig authentisieren.

Die US 2003 / 165239 von Bantz et al. offenbart ein System zur Schallpräsentation basierend auf verschlüsselten Schalldaten. Ein privater Schlüssel wird hierbei in einem Schlüsselanhänger gespeichert.

Die WO 2015 / 001135 A2 von El-Hoiydi et al. offenbart ein ähnliches System wie Pedersen und Bantz. Schall einer Beschallungsanlage soll nur für registrierte Benutzer bzw. Hörgeräte zugängig gemacht werden. Dabei wird ein öffentlicher Schlüssel verwendet.

Ferner gibt es Patentpublikationen zum Thema Trusted Platform Module:

Die US 2010 / 0088523 von Wooten offenbart ein Trusted Platform Module, welches unter anderem in einem Smartphone vorgesehen sein kann. Es wird ein "Bluetooth Wireless Headset" erwähnt, jedoch nicht als Zielgerät für ein Trusted Platform Module.

### Darstellung der Erfindung

Es ist die technische Aufgabe der Erfindung die Sicherheit im Bereich Hörgeräte zu verbessern sowie ein Hörgerät mit einer Zusatzfunktionalität zu versehen, die es erlaubt das Hörgerät nicht nur zum Hören sondern auch im Bereich Sicherheit allgemein einzusetzen.

Insbesondere soll zumindest ein Teil der folgenden Hackerangriffe abgewehrt werden können: (A) Umwandlung billiger Hörgeräte in teure durch unzulässige Upgrades; (B) Unbefugte Verlängerung zeitlich begrenzter Abonnements; (C) Auslesen geheimer Algorithmen und Reverse Engineering sowie Nutzung der so gewonnenen Information durch Mitbewerber; (D) Mithören bzw. Lauschangriff auf den Schwerhörigen; (E) Auslesen von Audiogrammdaten und anderen Gesundheitsdaten des Schwerhörigen; (F) Sabotieren des Hörgerätes, zum Beispiel indem das Fitting überschrieben wird oder indem das Hörgerät fernausgeschaltet wird; (G) Einbringen von Malware wie zum Beispiel Viren, Trojanische Pferde, Computerwürmer, Hintertüren, Spyware, Adware und Dialer; (H) Angriffe aus dem Internet allgemein; (I) Seitenkanalangriffe, insbesondere basierend auf der Analyse von Laufzeit, Energieverbrauch und/oder elektromagnetischer Abstrahlung.

Diese technische Aufgabe wird gemäss Anspruch 1 dadurch gelöst, dass ein Teil eines Hörgerätes die Funktionalität eines Trusted Platform Module bereitstellt.

Das Hörgerät kann somit für Verschlüsselungs- und Signieroperationen benutzt werden, sowohl für das Hörgerät selbst, als auch für externe Geräte und Systeme. Der private Schlüssel muss dabei das Hörgerät nicht verlassen, was die Sicherheit stark verbessert. Ferner ergibt sich eine Synergie zwischen der Hörgerätefunktion und der Sicherheitsfunktion, weil beides, Hören und Sicherheit, in der Regel personenbezogen sind. Das Hörgerät kann als Ersatz für andere Sicherheitsgeräte, wie zum Beispiel Smartcards und Security-Tokens, und/oder Sicherheitsdaten, wie zum Beispiel Login und Passwort, dienen. Der Benutzer muss so auf weniger Geräte aufpassen, was das Risiko eines Verlustes durch Verlieren oder Diebstahl reduziert. Der Verlust eines Hörgerätes wird zudem schneller bemerkt, als der eines konventionellen Security Tokens. Ferner müssen fallweise auch weniger Akkus geladen werden.

Gemäss Anspruch 2 ist das Hörgerät zur Bereitstellung der Funktionalität eines Trusted Platform Module für einen externen Computer ausgebildet. Dies hat den Vorteil, dass der externe Computer nicht über ein solches Modul verfügen muss, was unter anderem Kosten sparen und einen Einbau erübrigen kann.

Gemäss Anspruch 3 wird zumindest ein Teil der kryptographischen Algorithmen in Software bzw. als Computerprogrammcode ausgeführt. Dies hat den Vorteil, dass Geräte ohne Hardwareänderung mit einer erweiterten oder aktualisierten Funktionalität versehen werden können.

Gemäss Anspruch 4 weist das Hörgerät einen Kryptoprozessor auf. Ein Kryptoprozessor zusätzlich zu einem Hauptprozessor hat den Vorteil, dass dieser speziell für kryptographische Algorithmen optimiert werden kann und mit anderen Rechten, insbesondere Speicherzugriffsrechten, versehen werden kann, wie der Hauptprozessor.

Gemäss Anspruch 5 sind die für die Sicherheit relevanten Komponenten zumindest teilweise im und/oder am Ohr angeordnet. Dies hat gegenüber Lösungen wie einer Smartcard den Vorteil, dass man die Sicherheitsfunktionen immer verfügbar hat (das Hörgerät trägt man sowieso) und ein Verlust schnell bemerkt wird: Man hört nicht mehr und spürt, dass im Ohr etwas fehlt. Bei binauralen Hörsystemen kann ein Verlustalarm implementiert werden, indem die Verbindung zum Gegenhörgerät überwacht wird.

Gemäss Anspruch 6 weist das Hörgerät einen hardwarebasierten nicht-pseudo Zufallsgenerator auf. Dieser ist wichtig für kryptographische Algorithmen und insbesondere das Generieren von Schlüsseln.

Gemäss Anspruch 7 ist zumindest ein Teil des Betriebssystems des Hörgeräts algorithmisch versiegelt. Dies schützt das Hörgerät, und insbesondere seine Sicherheitsfunktionen für externe Geräte, gegen das Einbringen von Schadsoftware.

Gemäss Anspruch 8 ist ein öffentlicher Schlüssel einer vertrauten Instanz im Hörgerät gesichert gespeichert. Dies erschwert oder verhindert das Einbringen eines unechten solchen Schlüssels und verbessert damit die Sicherheit bei der Verwendung dieses Schlüssels, insbesondere beim Überprüfen von Signaturen der Instanz und bei der Verwendung von Zertifikaten der Instanz.

Gemäss Anspruch 9 weist das Hörgerät Mittel zur Durchführung von Biometrie auf. So kann ermittelt werden, welche bzw. ob die richtige Person das Hörgerät trägt. Dies kann ein Passwort ersetzen und/oder eine Multi-Faktor-Authentisierung ermöglichen. Biometrie mit einem Hörgerät ist benutzerfreundlich, da die Person das Messgerät, welches kompakt ist, bereits am Ohr trägt und sich nicht erst mit einem Scanner oder dergleichen vertraut machen muss.

Gemäss Anspruch 10 wird bei der Biometrie ein Ohrkanalmikrofon verwendet. Dieses ermöglicht die Messung von otoakustischen Emissionen sowie die Durchführung einer Sprechererkennung, die besser gegen "Replay"-Angriffe geschützt ist als eine basierend nur auf einem Umgebungsschallmikrofon.

Gemäss Anspruch 11 weist das Hörgerät Mittel zur Multi-Faktor-Authentisierung des Benutzers gegenüber dem Hörgerät auf. Eine Multi-Faktor-Authentisierung bietet eine besonders hohe Sicherheit. Mit einer Authentisierungsfunktion ist es möglich das Recht der Benutzung der Sicherheitsfunktionen an einen bestimmten Hörgeräteträger zu binden. Die ermöglicht vielfältige Verwendungen des Hörgerätes, zum Beispiel beim Login an einem Computer, beim Entsperren eines Smartphones oder im Bereich der digitalen Rechteverwaltung für Medien.

Anspruch 12 betrifft eine Public-Key-System umfassend das erfindungsgemässe Hörgerät und eine sogenannte Public-Key-Infrastruktur. Über diese kann zwischen den verschiedenen Geräten - und damit Nutzern - des Systems "Vertrauen" sowie "gemeinsame Geheimnisse" geschaffen werden. Der Hörgerätehersteller oder die Hörgerätemarke, zum Beispiel Sonova oder Phonak, im Folgenden kurz "Hersteller" genannt, kann die Rolle der Zertifizierungsstelle übernehmen, was der Unabhängigkeit von externen Dienstleistern dient. Dies kann den Administrationsaufwand und die Kosten reduzieren. Ferner kann es die Kundenbindung verbessern.

Anspruch 13 betrifft ein Kommunikationssystem zum verschlüsselten Telefonieren. Das Hörgerät kann hierbei als Sprechgarnitur für das Telefon benutzt werden. Wenn die Ver- und Entschlüsselung direkt im Hörgerät erfolgt, wird vermieden, dass unverschlüsselte Schalldaten das Hörgerät verlassen bzw. per Funk, wenn auch nur lokal, übertragen werden. Dies garantiert eine hohe Sicherheit.

Anspruch 14 betrifft ein Kommunikationssystem zum verschlüsselten Austausch von Daten. Die Ver- und Entschlüsselung im Hörgerät sowie die Speicherung der Schlüssel in diesem garantiert eine hohe Sicherheit, ohne dass der Benutzer ein zusätzliches Gerät mit sich herumtragen muss.

Anspruch 15 betrifft ein Computersystem. Der Login an einem Computer erfolgt mittels des Hörgerätes. Dies hat den Vorteil, einer hohen Sicherheit. Je nach Ausführungsform muss sich der Benutzer keine Login-Daten merken und kein zusätzliches Gerät mit sich herumtragen. Es kann ein Single-Sign-On-System realisiert werden, bei dem der Benutzer alleine aufgrund der Authentisierung dem Hörgerät gegenüber zu einer Vielzahl von Geräten und Diensten Zugang erhält. Dazu zählen neben PCs auch Smartphones, spezielle Internetseiten sowie auch Türen und Schliesssysteme.

### Kurze Beschreibung der Zeichnungen

Fig. 1 zeigt schematisch ein Hörgerät mit einem Trusted Platform Module gemäss der Erfindung;
Fig. 2 zeigt schematisch ein Hörgerät gemäss der Erfindung im Kontext einer Public-Key-Infrastruktur.

### Wege zur Ausführung der Erfindung und gewerbliche Verwendbarkeit

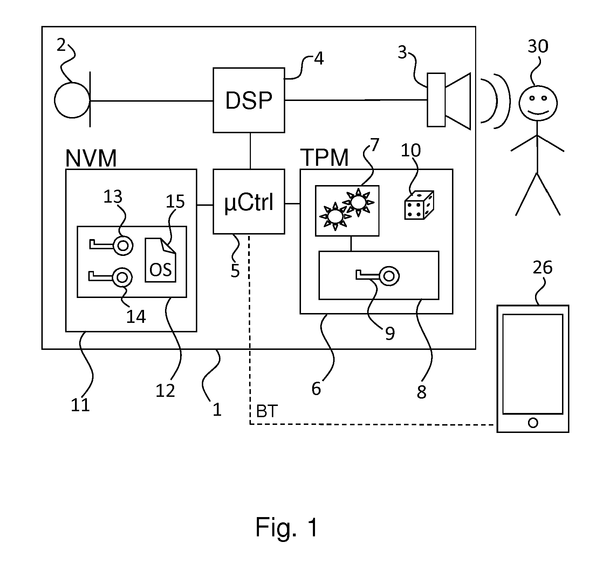

Fig. 1 zeigt schematisch ein Hörgerät 1 gemäss der Erfindung. Schall wird über ein Umgebungsmikrofon 2 aufgenommen, mit einem Signalprozessor 4 verarbeitet und über einen Hörer 3 dem Schwerhörigen 30 präsentiert. Es gibt einen Mikrocontroller oder Hauptprozessor 5 (primären Prozessor), sowie einen nicht-flüchtigen Speicher 11 (NVM). Das Trusted Platform Module 6 (TMP) umfasst einen Kryptoprozessor 7, einen gesicherten Speicher 8 sowie einen Zufallsgenerator 10. Im gesicherten Speicher 8 befindet sich ein privater Schlüssel 9 des Hörgerätes 1. Auf den gesicherten Speicher 8 kann nur der Kryptoprozessor 7 zugreifen, nicht hingegen der Hauptprozessor 5. Der Zugriff kann ferner auf Krypto-Funktionen beschränkt sein, so dass es nicht möglich ist, dass der Kryptoprozessor 7 einen Schlüssel liest und in einen weniger geschützten Speicher schreibt. Der nicht-flüchtige Speicher 11 weist einen algorithmisch versiegelten Speicherbereich 12 auf. In diesem befindet sich das Betriebssystem 15, der öffentliche Schlüssel 13 des Hörgerätes 1 sowie ein öffentlicher Schlüssel 14 eines Herstellers oder einer anderen vertrauten Instanz. Die Versiegelung kann durch die Speicherung eines Hashfunktionsresultates im Trusted Platform Module 6 realisiert sein. Der öffentliche Schlüssel 13 des Hörgerätes 1 ist vorzugsweise mit dem geheimen Schlüssel des Herstellers signiert, wodurch ein Zertifikat geschaffen wird, welches das Hörgerät 1 als Original des Herstellers beglaubigt. Das Hörgerät 1 kann insbesondere über Bluetooth mit externen Geräten kommunizieren, so zum Beispiel mit einem Smartphone 26. Der gezeigte Aufbau ist exemplarisch. Variationsmöglichkeiten ergeben sich unter anderem aus dem weiter unten folgenden Text.

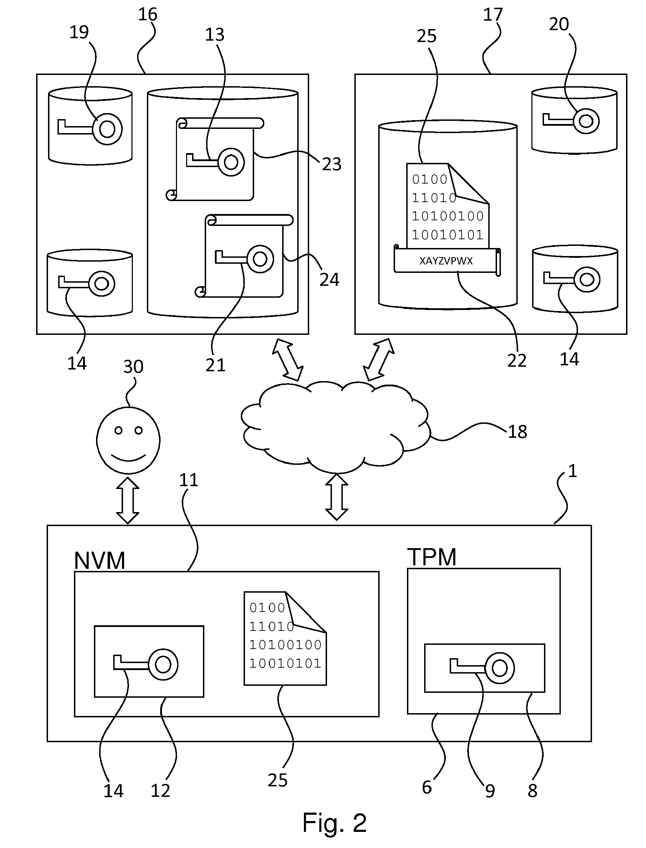

Fig. 2 zeigt schematisch ein Hörgerät 1 gemäss der Erfindung im Kontext einer Public-Key-Infrastruktur. Der Hersteller 16 kann hierbei die Rolle einer Zertifizierungsstelle und Registrierungsstelle übernehmen. Der Hersteller 16 verfügt über ein Schlüsselpaar bestehend aus einem privaten Schlüssel 19 und einem öffentlichen Schlüssel 14. Der öffentliche Schlüssel 14 wir zum Download angeboten. Ferner wird exemplarisch ein Zertifikat 24, welches einen registrierten Software-Fremdanbieter 17 als vertraut beglaubigt, zum Download angeboten. Software-Fremdanbieter werden im folgenden kurz mit Fremdanbieter bezeichnet. Die Hörgeräte 1 sind ab Fabrik mit dem öffentlichen Schlüssel 14 des Hersteller 16 versehen. Mit diesem Schlüssel lässt sich im Hörgerät 1 die Echtheit von Zertifikaten des Herstellers 16, insbesondere des Zertifikates 24, prüfen. Mit "Zertifikat" sind im vorliegenden Dokument durchweg digitale Zertifikate gemeint.

Ein Beispielanwendungsszenario: Ein schwerhöriger Mensch 30 möchte auf seinem Hörgerät 1 ein zusätzliches Softwaremodul 25, wie zum Beispiel einen speziellen Windschallunterdrücker eines Fremdanbieter 17, installieren.

Hierbei sollen folgende mögliche Angriffe abgewehrt werden: (A) Nicht autorisierte Fremdanbieter bzw. deren Software soll keinen Zugang zum Hörgerät haben; (B) Das Softwaremodule soll bei der Übertragung übers Internet nicht ausgewechselt werden können; (C) Es soll nicht möglich sein ein Softwaremodule unbefugt mehrfach, auf verschiedenen Geräten zu installieren; (D) Es soll nicht möglich sein Software auf einem als gestohlen gemeldeten Hörgerät 1 zu installieren.

Als Vorbereitung für das Anwendungsszenario generiert sich der Fremdanbieter 17 ein Schlüsselpaar bestehend aus einem privaten Schlüssel 20 und einem öffentlichen Schlüssel 21. Mit letzterem registrieren er sich beim Hersteller 16, welcher diesen Schlüssel 21 dann signiert als Zertifikat 24 zum Download anbietet. Das Zertifikat 24 beglaubigt den Fremdanbieter 17 als vertraute Instanz. Ferner kopiert sich der Fremdanbieter 17 den öffentlichen Schlüssel 14 des Herstellers 16 und speichert ihn bei sich, damit er Signaturen des Herstellers 16 überprüfen kann. Der Hersteller 16 bietet den öffentlichen Schlüssel 13 des Hörgerätes 1 signiert, d.h. als Zertifikat 23, zum Download an, wobei jedoch vorzugsweise ein Berechtigungsnachweis erforderlich ist. Der Schwerhörige 30 bestellt nun auf einer Webseite des Fremdanbieter 17 das Softwaremodul 25 und zahlt es zum Beispiel durch Bekanntgabe seiner Kreditkarteninformationen. Ferner gibt er dem Fremdanbieter 17 seine Identität durch Identitätsdaten bekannt. Beispiele für Identitätsdaten sind Name und Geburtstag sowie die Seriennummer und/oder der öffentliche Schlüssel des Hörgerätes 1. Der Fremdanbieter 17 signiert nun, oder auch schon vorgängig, das Softwaremodul 25 mit seinem privaten Schlüssel 20, d.h. er berechnet eine digitale Signatur 22. Ferner verschlüsselt er das Softwaremodul 25 mit dem öffentlichen Schlüssel 13 des Hörgerätes 1, welchen er als Zertifikat 23 von der Datenbank des Hersteller 16 basierend auf den Identitätsdaten herunterlädt. Alternativ kann er das Zertifikat 23 auch direkt vom Hörgerät 1 bzw. Benutzer 30 erhalten, wobei jedoch die Gefahr besteht, dass sich ein Hacker unbefugt als Hörgerät 1 ausgibt um an eine unverschlüsselte Version des Softwaremoduls zu gelangen. Anschliessend übermittelt der Fremdanbieter 17 das verschlüsselte Softwaremodul 25 mit der Signatur 22 über das Internet 18 ans Hörgerät 1. Dort wird die Signatur 22 geprüft. Erforderlichenfalls wird das Zertifikat 24, welches den Fremdanbieter 17 beglaubigt von der Datenbank des Hersteller 16 oder einer anderen Datenbank heruntergeladen. Ferner wird das Softwaremodul 25 mit dem privaten Schlüssel 9 des Hörgerätes 1 entschlüsselt. Die Signaturprüfung schütz hierbei vor nicht-autorisierten Fremdanbietern und vor dem Einschleusen von Schadsoftware, zum Beispiel durch einen Mittelsmann-Angriff. Das Verschlüsseln mit dem öffentlichen Schlüssel 13 des Hörgerätes 1 schützt vor unbefugtem Installieren des Softwaremoduls auf weiteren Hörgeräten, da diese ein derart verschlüsseltes Softwaremodul nicht entschlüsseln können. Dasselbe gilt für Wettbewerber, die mittels "Reverse Engineering" Algorithmen für sich nutzbar machen bzw. nachbauen wollen. Die entschlüsselte Version des Softwaremoduls liegt nur im Hörgerät vor und kann von dort vorzugsweise nicht ausgelesen werden. Als zusätzlicher Schutz kann die Software einer sogenannten "obfuscation" unterzogen werden, d.h. sie wird derart verwirrt bzw. durch einander gebracht, dass sie zwar auf dem Prozessor noch funktioniert, es aber für einen Menschen nicht mehr nachvollziehbar ist, wie sie funktioniert. Vorzugsweise beinhaltet das Szenario zumindest eine Anfrage bei der Datenbank des Herstellers 16, welche es erlaubt gestohlen gemeldete Hörgeräte als solche zu erkennen. Zumindest kann dann die Installation des zusätzlichen Softwaremoduls unterbunden werden. Es ist jedoch auch denkbar das Hörgerät 1 komplett zu deaktivieren. Bei der Anfrage kann es sich insbesondere um das Abfragen des Zertifikates des Hörgerätes handeln.

Hörgerätevarianten: Die Erfindung betrifft primär klassische am und/oder im Ohr getragene Hörgeräte, wie zum Beispiel HdO-, IdO- und Ex-Hörer-Geräte. Sie lässt sich jedoch auch auf Sprachprozessoren von Cochlear-Implantaten anwenden. Der Begriff "Hörgerät" ist beim vorliegenden Dokument so auszulegen, dass er auch Cochlear-Implantat-Systeme umfasst. Nicht umfassen soll er Smartphones mit konventionellen Ohrhörern, wobei auf dem Smartphone eine Hörgeräte-App läuft. Als Abgrenzungskriterium bei der Auslegung der Ansprüche soll gelten, dass ein "Hörgerät" alleine aufgrund der am und/oder im Ohr getragenen Bestandteile hinsichtlich der Hörverlustkompensation bzw. Schallverstärkung funktionsfähig sein muss. (Hör-)Brillen gelten hierbei als "am Ohr" getragen (auch wenn sie genau genommen "am Kopf" und nur teilweise "am Ohr" getragen sind). Taschenhörgeräte, wie es sie früher gab, sind also wie die Hörgeräte-Apps ausgeschlossen. Zusatzgeräte, wie ein Smartphone, können jedoch zum Beispiel für die Programmierung oder die Bedienung erforderlich sein. Zumindest ein Teil des erfindungsgemässen Hörgerätes ist digital. Die Signalverarbeitung kann analog und/oder digital erfolgen. Das Hörgerät hat vorzugsweise eine wieder aufladbare Batterie bzw. einen Akku. Bei geringer Batterieladung kann die Hörgerätefunktion, d.h. die Hörverlustkompensation, abgeschaltet oder reduziert werden um die Krypto- bzw. Sicherheitsfunktionen noch länger verfügbar zu halten. Meistens wird ein binaurales System bestehend aus zwei Hörgeräten benutzt. Hier kann es fallweise reichen, wenn eines der beiden Hörgeräte gemäss der Erfindung ausgestaltet ist oder die Sicherheitsfunktionskomponenten auf die beiden Geräte verteilt sind.

Nicht-Hörgeräte: Der initiale Anspruchssatz ist bewusst auf Hörgeräte eingeschränkt. Zum Zwecke der Offenbarung sei jedoch noch bemerkt, dass sich die im vorliegenden Text beschriebenen Merkmale mit mehr oder weniger erfinderischem Aufwand auch auf folgende Geräte anwenden bzw. übertragen lassen: Hörsysteme für Normalhörende, Hörverstärker, Gehörschutzausrüstungen, Hearables, Wearables, Uhren, Smartwatches, Fitnessbänder, Ohrschmuck, Stirnlampen, Sprechgarnituren von Telefonen, drahtlose Ohrhörer, zum Beispiel für MP3 Player, diverse Bluetoothgeräte, am Körper getragen Geräte, medizintechnische Implantate im Allgemeinen, zum Beispiel Herzschrittmacher sowie unter die Haut injizierte RF-ID Chips, wie sie bei Haustieren Verwendung finden.

Hörgerätebedienung bzw. Benutzerinteraktion: Hörgeräte habe oft einen (mechanischen) Lautstärkesteller (zum Beispiel eine Wippe) und/oder einen Programmschalter ("Toggle"). Damit sind einfache Benutzereingaben wie Ja/Nein Antworten oder die Eingabe binärer Passwörter realisierbar. Über den Hörer können Sprachmitteilungen abgegeben werden, zum Beispiel ein temporärer Zugangskode für ein Computersystem. Ferner kann der schwerhörige Mensch Sprechen und so bestimmte Eingaben, zum Beispiel eines Passwortes, vornehmen, welche mittels Spracherkennung (vorzugsweise im Hörgerät) ausgewertet werden. Es sind auch andere akustische Eingaben mögliche, wie ans Gehäuse klopfen, Klatschen oder von einem Smartphone generierte Töne, wie zum Beispiel DTMF Töne (Doppelton-Mehrfrequenz). Das Hörgerät kann einen Magnetsensor (zum Beispiel GMR) aufweisen, so dass Eingaben durch Annähern eines Magneten (Nord/Süd) möglich sind. Das Hörgerät kann einen (Magnet-) Kompass und/oder Beschleunigungssensoren aufweisen um Gesten wie Nicken oder Kopfschütteln zu erkennen. Das Hörgerät kann eine oder mehrere LED aufweisen. Diese kann mit unterschiedlichen Farben oder Blinkmustern verschiedene Zustände oder Ereignisse signalisieren. Ferner kann das Hörgerät ein kleines Display (LCD, OLED, elektrophoretisch) aufweisen. Insbesondere komplexere Bedienvorgänge können über eine Fernbedienung oder ein Smartphone mit einer Fernbedienungs-App erfolgen.

Hörgerätekonnektivität: Das Hörgerät gemäss der Erfindung hat bevorzugt eine Schnittstelle gemäss Bluetooth Standard (Classic, Low Energy, Hearing Aid Profile). Über ein Smartphone als Zwischengerät kann aufs Internet und aufs öffentliche Telefonnetz zugegriffen werden. Es ist auch möglich das Hörgerät direkt mit einer WiFi bzw. WLAN Schnittstelle oder einer Mobilfunkschnittstelle (GSM, UMTS, LTE, etc.) zu versehen. Ferner kann es elektrische Anschlüsse haben, zum Beispiel einen Programmierbuchse oder Kontakte im Batteriefach. Der Anschluss kann seriell gemäss USB Standard oder gemäss RS232 funktionieren. Insbesondere fürs bargeldlose Zahlen und Schliesssysteme kann eine Nahfeldkommunikation (NFC/RFID/13.56 MHz) vorgesehen sein. Die Kommunikation mit einem Kontra-Hörgerät (bei binauralen Systemen), mit einem am Körper getragenen Streaming-Gerät oder mit einer Fernbedienung kann über einen proprietären Funkstandard erfolgen, wie das induktive HIBAN von Phonak (10.6 MHz). Ferner kann Datenübertragung über Licht und insbesondere Infrarot erfolgen (Simplex oder Duplex). Schall von einem Telefon oder einer Beschallungsanlage kann über eine sogenannte Telefonspule (t-coil) empfangen werden. Das Signal externer Mikrofone kann über FM empfangen werden. Hierfür kann ein Zusatzmodul erforderlich sein.

Hörgerät mit Internetfunktionen: Das Hörgerät kann eine eigene Internetadresse haben. Es kann als Webserver oder Webclient funktionieren. Insbesondere kann die Einstellung (das Fitting) und die Wartung des Hörgerätes über ein Webinterface bzw. eine Web-Seite erfolgen. Hierbei kann das Hörgerät entweder selber direkt als Webserver funktionieren, oder der Webserver wird zum Beispiel vom Hersteller betrieben, der in der Rolle eines Zwischenhändlers (Middleman) zugleich mit dem Hörgerät und dem Webclient kommuniziert. Der Benutzer gibt also zum Beispiel in einem Internet-Cafe im Browser die Adresse "http://www.phonak.com/hoeri" ein. Das Hörsystem kann dabei einen Spitznamen haben, im vorliegenden Beispiel "hoeri", so dass die Adresse leicht zu merken ist. Der Server kontaktiert dann das Hörgerät, liest die aktuellen Einstellungen aus und präsentiert sie graphisch im Browser zur Inspektion und Veränderung. Verschiedene Sicherheitsfunktionen können über eine solche Schnittstelle bedient werden, wie das Generieren und Verwalten von Schlüsseln, sowie das Installieren und Deinstallieren von Softwaremodulen. Zum Schutz gegen unbefugte Nutzung dieser Schnittstelle kann die Website zunächst den Benutzer auffordern am Hörgerät eine bestimmte Benutzeraktion vorzunehmen, wie das Aufsagen eines Code-Wortes oder das Betätigen der Lautstärkewippe.

Hörgerätedienste: Das Hörgerät verfügt vorzugsweise über eine, insbesondere zumindest teilweise öffentliche, Schnittstelle bzw. Programmierschnittstelle (API, Application Programming Interface). Diese kann in Form eines Webservice bereitgestellt werden. Auf einem Windows Betriebssystem kann sie in Form von einer oder mehrerer .NET-DLLs (Dynamic Link Library für .NET Managed Framework) bereit gestellt werden. Es sind auch analoge Lösungen für Android-Betriebssysteme oder iOS möglich. Ein Hörgerät kann externen Geräten die folgenden Dienste anbietet: (A) Kryptographische Operationen: (A1) Verschlüsselung, (A2) Entschlüsselung, (A3) Hashfunktionsberechnung, (A4) Signierung, (A5) Signaturüberprüfung, (A6) Authentisierung des Hörgerätes gegenüber einem anderen Gerät, (A7) Authentisierung eines anderen Gerätes gegenüber dem Hörgerät, (A8) Eingabe von Passwörtern, insbesondere über Spracherkennung, (A9) Überprüfung von Passwörtern, Hardwarebasierter Zufallsgenerator; (B) Schlüsselverwaltung: (B1) Generieren von Schlüsseln und Schlüsselpaaren, (B2) Speichern von Schlüsseln, (B3) Weitergabe von Schlüsseln (zum Beispiel öffentlicher Schlüssel Hörgerät und Hersteller), (B4) Löschen von Schlüsseln, (B5) Definieren von Schlüsselhierarchien; (C) Benutzerverwaltung (wobei es sich um Menschen und/oder Geräte handeln kann): (C1) Konto erstellen (Name, Passwort etc.), (C2) Rechte für Konto vergeben, (C3) Konto löschen; (D) Audiofunktionen: (D1) Weitergabe von aus der Umgebung aufgenommen Schallen, (D2) Weitergabe der Stimme des Hörgeräteträgers (zum Beispiel mittels Kanalmikrofon aufgenommen), (D3) Präsentieren von akustischen Nachrichten dem Hörgeräteträger gegenüber, (D4) MP3-Player: Wahl der Quelle, Start, Stopp, Aufnahme, Pause etc., (D5) Text-to-Speech, (D6) Speech-to-Text, (D7) Aufbereiten von Schall(daten) für Schwerhörige, (D8) Hörverlustkompensation, (D9) Hörverlustsimulation; (E) Speichern von Daten im Hörgerät: (E1) unverschlüsselt oder verschlüsselt, (E2) privat, in Form eines "Cookies", (E3) mit Datenbankfunktionalität, (E4) mit Zugriffsrechtsverwaltung, (E5) Abruf kontinuierlich, in Form eines "Streams", zum Beispiel für Audio, (E6) Abfrage des verfügbaren Speichers, (E7) Persistent oder flüchtig, (E8) mit oder ohne Backup in einer Cloud, insbesondere des Herstellers, (E9) Auslösen eines Backups; (E10) Wiederherstellen basierend auf einem Backup; (F) Datenbereitstellung: (F1) Seriennummer, (F2) öffentliche(r) Schlüssel des Hörgerätes, insbesondere signiert, (F3) Hersteller, (F4) Modell, (F5) Familie, (F6) Webserveradressen vom Hersteller, vom Zertifikatsserver etc., (F7) installierte Updates und/oder Upgrades, (F8) Ablaufkriterium im Falle temporärere Upgrades, (F9) personenbezogene Daten zum Beispiel digitale Visitenkarte, Audiogramm, Gesundheitsdaten, (F10) Sensordaten, insbesondere Temperatur und Beschleunigung, (F11) Uhrzeitdaten und Ortsdaten, insbesondere basierend auf GPS, (F12) Signalverarbeitungsparameter, (F13) Datalogging, (F14) Information, ob ein Kontra-Hörgerät in Reichweite ist, (F15) Daten des Kontra-Hörgerätes, (F16) Ladezustand der Batterie des Hörgerätes, (F17) Tragezustand und Sitz (eingesetzt, links oder rechts); (G) Fernbedienung des Hörgerätes: (G1) Ein, Aus, Bereitschaft, (G2) Laustärke, (G3) Höhen, Tiefen, (G4) Rechts/Links Balance, (G5) Hörprogramm, (G6) Aktivieren alternativer Schallquellen, zum Beispiel der Telefonspule, (G7) Aktuatoren (Richtmikrofon etc.); (H) Fitting: (H1) Verstärkungskurven, (H2) verfügbare Hörprogramme, (H3) Lautheitskompression, (H4) Frequenzkompression; (I) Biometrie: (11) In-situ Audiometrie, (12) Gehörgangsecho, (13) Eigenstimme, (14) otoakustische Emissionen, (15) Fingerabdrucksensor; (J) Vitalfunktionen des Hörgeräteträgers: (J1) Körpertemperatur, (J2) Puls, (J3) Hautwiderstand, (J4) EEG; (K) Lebenszyklusverwaltung: (K1) Temporäres Sperren aller (Sicherheit-)Daten für den Fall Reparatur, (K2) Auslösen einer Überprüfung ob Updates verfügbar sind, (K3) Kaufen von Upgrades, (K4) Löschen aller (Sicherheit-)Daten für den Fall der Entsorgung.

Hörgeräteidentität: Das erfindungsgemässe Hörgerät hat vorzugsweise ein universell eindeutige, nicht veränderbare Identität bzw. Identitätskennung. Dies kann zum Beispiel eine in einem nur lesbaren oder versiegelten Speicher abgelegte Seriennummer sein. Es kann jedoch auch ein öffentlicher Schlüssel des Hörgerätes hierfür benutz werden. Die Identitätskennung ist vorzugsweise vom Hersteller signiert. Zusätzlich kann eine Identitätskennung auf dem Hörgerät aufgedruckt sein, insbesondere derart, dass sie zunächst verdeckt ist und erst freigerubbelt werden muss.

Hörgeräteregister: Der Hersteller kann ein Register für Hörgeräte bereitstellen. Neben einer Seriennummer können öffentliche Schlüssel von Hörgeräten, eine Identifikation des Besitzers und Akustikers, Anpassungen (Fittings) sowie eine Akte bzw. Historie gespeichert werden, in welcher Reparaturen, Besitzerwechsel, Upgrades und dergleichen vermerkt werden. Die Inbetriebnahme von Hörgeräten kann an eine (Neu-)Registrierung gebunden werden. Im Register kann auch vermerkt werden, wenn ein Hörgerät als gestohlen gemeldet wird. Solche Hörgeräte könne, sobald sich eine Gelegenheit dazu bietet, deaktiviert werden. Siehe hierzu auch den Absatz "Public-Key-Infrastruktur".

Hörgerätefamilien: Das Hörgerätesortiment eines Herstellers umfasst meist verschiedene Modelle. Modelle einer Familie haben generell verschiedene Funktionsmerkmale gemeinsam. Solche Hörgeräte können über einen gemeinsamen geheimen Schlüssel oder ein gemeinsames Schlüsselpaar verfügen. So ist es für einen Softwaremodulanbieter möglich bestimmte Module nur für eine bestimmte Hörgerätefamilie freizugeben, ohne das Modul für jedes Empfängergerät gesondert verschlüsseln zu müssen. Das Familienschlüsselpaar existiert vorzugsweise zusätzlich zum gerätespezifischen Schlüsselpaar. Je höherwertig eine Hörgerätefamilie ist, über desto mehr Schlüsselpaare verfügen die zugehörigen Geräte. Siehe hierzu auch den Absatz "Mehreren Schlüsselpaare" und den Absatz "Schlüsselbaum".

Kopplung zwischen Hörgeräten: Für eine Kopplung (Pairing) zwischen zwei Hörgeräten bei einem binauralen System kann jeweils ein öffentlicher Schlüssel des Partnergerätes oder ein gemeinsamer geheimer Schlüssel gespeichert werden. Es kann auch auf die Pairing-Verfahren des Bluetooth Standards zurückgegriffen werden. Analog zu den Hörgerätefamilien können auch Partnergeräte eines binauralen Hörsystems über gemeinsame Schlüsselpaare verfügen, damit zum Beispiel Softwaremodule nicht separat für links und rechts geliefert werden müssen. Diese gemeinsamen Schlüsselpaare können bereits in der Fabrik einprogrammiert werden und unterliegen vorzugsweise den im vorliegenden Dokument beschriebenen Schutzmechanismen (zum Beispiel gegen Auslesen). Es ist aber auch möglich ein spezielles Kopplungsverfahren vorzusehen, bei dem ein privater Schlüssel vom ersten zum zweiten Gerät übertragen wird. Hierbei besteht die Gefahr, dass der private Schlüssel abgehört und auf weitere Hörgeräte übertragen wird, um zum Beispiel ein Mehrfach-Upgrade ermöglicht. Ferner kann das Pairing-Szenario wird vorgetäuscht werden um an den privaten Schlüssel zu gelangen. Um dies zu verhindern können folgende Massnahmen ergriffen werden: (A) Der private Schlüssel des ersten Gerätes kann für die Übertragung ans zweite Gerät mit dem öffentlichen Schlüssel des zweiten Gerätes verschlüsselt werden; (B) Der private Schlüssel des ersten Gerätes wird mit dem öffentlichen Schlüssel des Herstellers verschlüsselt und an ihn übertrage. Der Hersteller entschlüsselt ihn und verschlüsselt ihn mit dem öffentlichen Schlüssel des zweiten Gerätes. Dieses Umverschlüsseln wird wiederum nur dann ausgeführt, wenn der Umverschlüsselungsauftrag von einem autorisierten Akustiker signiert wurde. Siehe hierzu auch den Absatz "Sicherheitstoken für Akustiker".

Asymmetrische Verschlüsselung: Bei der vorliegenden Erfindung wird eine asymmetrische Verschlüsselung verwendet. Sie wird auch als Public-Key-Verschlüsselung bezeichnet. Sie basiert auf sogenannten Einwegfunktionen, welche leicht berechenbar sind aber schwer umzukehren. Verschlüsselt wird mit dem öffentlichen Schlüssel, entschlüsselt mit dem privaten. Als asymmetrisches Verschlüsselungsverfahren wird insbesondere das RSA-Verfahren benutzt (Rivest, Shamir und Adleman). Eine typische Schlüssellänge ist hierbei derzeit 2048 Bit. Es können auch andere Verfahren, wie zum Beispiel eine Elliptische-Kurven-Kryptographie oder aktuell noch nicht bekannte Verfahren benutzt werden. Die beteiligten Geräte bilden ein sogenanntes asymmetrisches Kryptosystem.

Symmetrische Verschlüsselung: Neben asymmetrischen können bei der vorliegenden Erfindung auch symmetrische Verschlüsselungsverfahren benutzt werden, zum Beispiel AES (Advanced Encryption Standard). Diese sind schneller. Verschlüsselung und Entschlüsselung erfolgt mit dem gleichen Schlüssel. Gewöhnlich wird dabei ein Sitzungsschlüssel generiert, der dann asymmetrisch verschlüsselt an den Kommunikationspartner übertragen wird (Hybridverfahren). Die speziellen Speicher für Schlüssel (von aussen nicht auslesbar etc.) können auch für symmetrische Schlüssel benutzt werden, d.h. geheime Schlüssel, welche kein öffentliches Gegenstück haben. Insbesondere kann ein gemeinsamer geheimer Schlüssel vorgesehen sein, welcher nur im Hörgerät und beim Hersteller bekannt ist.

Hashfunktionsberechnung: Beim Signieren ist es aus Performanzgründen vorteilhaft nicht die Daten direkt zu signieren, sondern erst das Resultat einer Hashfunktion zu berechnen, und dieses dann zu signieren. Ein Beispiel für eine geeignete Hashfunktion ist SHA-2. (MD5 ist "obsolet", SHA-1 "being depreciated"). Die Länge des Resultats der Hashfunktion kann zum Beispiel 256 Bit sein.

Schlüsselgenerator: Bevorzugt erfolgt die Erzeugung von Schlüsselpaaren (öffentlich/privat) bei der Produktion des Hörgerätes und zumindest der private Schlüssel wird im Hörgerät gespeichert. Der öffentliche Schlüssel kann in einer Datenbank abgelegt bzw. öffentlich zugängig gemacht werden. Siehe hierzu auch den Absatz "Public-Key-Infrastruktur". Wenn man allfällige Performanzprobleme löst oder es keine "Echtzeitanforderungen" gibt, ist es auch möglich im Hörgerät und insbesondere in einem Trusted Platform Module einen Schlüsselpaargenerator bzw. einen Algorithmus zum Generieren von Schüsselpaaren vorzusehen. Der Schlüsselpaargenerator im Hörgerät hat den Vorteil, dass der private Schlüssel das Hörgerät nie verlässt, was die Sicherheit weiter verbessert. Ein solcher "hochgeheimer" privater Schlüssel könnte zum Beispiel für Anwendungen beim e-Banking oder beim verschlüsselten Telefonieren (Militär, Diplomatie etc.) benutzt werden. Hat der Hersteller Kenntnis vom privaten Schlüssel, so stellt das eine Hintertür dar, was je nach Sicherheitsstufe zu vermeiden ist. Die Kenntnis des privaten Schlüssels bzw. Ablage der privaten Schlüssel oder Schlüsselpaare durch den Hersteller in einer gesicherten Datenbank kann jedoch auch von Vorteil sein, zum Beispiel wenn ein Gerät ersetzt werden muss. Das Ersatzgerät kann dann genau mit derselben Identität programmiert werden wie das Originalgerät, so dass zugekaufte Softwaremodule auch auf dem Ersatzgerät laufen. Falls es einen speziell geschützten Speicher für Schlüssel gibt, so kann es von Vorteil sein, wenn der Schlüsselgenerator exklusive Schreibrechte für diesen Speicher hat. Beim Schlüsselpaargenerator kann es sich auch zumindest teilweise um einen softwareimplementierten Algorithmus handeln, welcher auf insbesondere auf einem Kryptoprozessor ausgeführt wird.

Mehrere Schlüsselpaare: Es können einem Hörgerät auch mehrere Schlüsselpaare zugeordnet werden. Es kann separate Schlüsselpaare fürs Verschlüsseln und Signieren geben. Ferner können zum Beispiel für gerätegebundene Softwaremodule und e-Banking Dienste unterschiedliche Schlüsselpaare verwendet werden. Der private Schlüssel für gerätegebundene Softwaremodule kann dem Hersteller bekannt sein, der private Schlüssel fürs e-Banking hingegen nicht. Siehe hierzu auch den Absatz "Hörgerätefamilien" und den Absatz "Schlüsselbäume".

Schlüsselbäume: Schlüssel können hierarchisch bzw. in einem oder mehreren Schlüsselbäumen strukturiert sein (So wie es in einem Haus einen Generalschlüssel, einen Wohnungsschlüssel und einzelne Zimmerschlüssel gibt). Dabei können Schlüssel einer Gruppe insbesondere mit einem Wurzelschlüssel verschlüsselt sein, so dass die Kenntnis des Wurzelschlüssels auch die Schlüssel der gesamten Gruppe verfügbar macht. Siehe hierzu auch den Absatz "Hörgerätefamilien" und den Absatz "Mehreren Schlüsselpaare".

Zufallsgenerator: Genau genommen müsste es heissen Zufallszahlengenerator oder Zufallsdatengenerator. Für verschiedene Kryptofunktionen wie, insbesondere das Generieren von Schlüsseln, kann im Hörgerät und insbesondere in einem Trusted Platform Module ein hardwarebasierter und damit nicht-deterministischer Zufallsgenerator vorgesehen sein. Hierfür kann allerdings auch das Mikrofon- oder ein Antennensignal des Hörgerätes benutzt werden. Die vom Hörgerät erzeugten Schlüssel haben so eine bessere Qualität als die eines normalen Personal Computers ohne spezielle Hardware.

Speicher mit Ausleseschutz, insbesondere für private bzw. geheime Schlüssel: Das erfindungsgemässe Hörgerät verfügt über einen oder mehrere spezielle, gesicherte bzw. geschützte Speicher für private bzw. geheime Schlüssel. Der Begriff "Speicher" ist im vorliegenden Dokument so auszulegen, dass es sich auch um einen Speicherbereich handeln kann, d.h. einen Teil eines Speichers, und insbesondere eines Speicherchips, der auch noch anders genutzte Speicherbereiche hat. Diese geschützten Speicher können zumindest im Normalbetrieb und von aussen, insbesondere über die Bluetooth-Schnittstelle, nicht ausgelesen werden. Bei den bekannten bzw. konventionellen Hörgeräten ist generell alles einsehbar. Daten aus diesen geschützten Speichern können bevorzugt einzig für alle oder ausgewählte von folgenden Sicherheitsfunktionen benutzt werden: Verschlüsselung, Entschlüsselung, Signierung, Signaturüberprüfung, Authentisierung des Hörgerätes gegenüber einem anderen Gerät sowie Authentisierung eines anderen Gerätes gegenüber dem Hörgerät. Es kann vorteilhaft sein, wenn die auslesegeschützten Speicher zudem gegen Modifikation geschützt sind, zum Beispiel im Falle eines privaten Wurzelschlüssels. Siehe hierzu die drei Absätze zum "Modifikationsschutz".

Hardwarebasierter Ausleseschutz von Speichern: Der Chip des Hörgerätes kann so ausgelegt werden, dass bestimmte Speicher nur für kryptographische Zwecke gelesen werden können. Die Daten können insbesondere nicht in andere, weniger geschützte Speicher transferiert werden. Für die kryptographischen Operationen kann ein separater Kryptoprozessor vorgesehen sein, welcher exklusiven Lesezugriff auf die geschützten Speicher hat. Es ist jedoch auch denkbar einen "normalen" Prozessor temporär in einem Krypto-Mode zu betreiben, in welchem er dann exklusiv Zugriff hat. Speicher können auch hardwarebasiert mit einem Passwort oder Code gegen Auslesen geschützt sein. So kann ein Passwortschutz in Hardware realisiert werden, zum Beispiel indem am Daten- und/oder Adressbus eine bestimmtes Bitmuster anliegen muss ehe Speicherinhalte lesbar sind. Es können bestimmte Bitmuster für Passwortänderungen vorgesehen sein. Es ist auch möglich einen Speicher mittels eines oder mehrerer "Bits" (Signal oder Speicher) für Zugriffe durch einen Prozessor freizugeben. Dieses Bit kann insbesondere von einem Trusted Platform Module gesetzt bzw. gesteuert werden.

Softwarebasierter Ausleseschutz von Speichern: Es gibt einen Betriebssystemkern, der dafür sorgt, dass bestimmte Speicher nur für kryptographische Zwecke gelesen werden können. Lesezugriffe auf bestimmte Speicheradressen werden erkannt und blockiert. Der Schutz des Betriebssystemkerns kann dabei wie folgt realisiert sein: (A) Der Betriebssystemkern ist Teil der Hardware. Bei der Hardware kann es sich um eine Chip-Maske oder einen Festwertspeicher (ROM, EPROM) handeln. (B) Der Betriebssystemkern ist signiert und die Hardware hat Vorkehrungen, dass nur ein signierter Kern aktiviert werden kann. Siehe hierzu auch die drei Absätze zum "Modifikationsschutz".

Speicher mit Modifikationsschutz: Für bestimmte Daten kann es unkritisch sein, wenn sie ausgelesen werden. Man möchte jedoch auf die Daten vertrauen können und sicherstellen, dass sie nicht unbefugt modifiziert werden. Zu diesen Daten gehören: (A) Der öffentliche Schlüssel bzw. ein Zertifikat des Herstellers; (B) Daten, die für die Identität des Hörgerätes relevant sind, insbesondere die Seriennummer des Hörgerätes sowie der öffentliche Schlüssel des Hörgerätes selbst, insbesondere mit Signatur des Herstellers, d.h. ein Gerätezertifikat; (C) Ein unveränderbarer Betriebssystem-Kern; (D) Signaturen von versiegelten Speichern; (E) Die Internet- oder IP-Adresse eines Servers (zum Beispiel eines Zertifikatsservers oder eines Hersteller-Servers). Typischerweise wird der Modifikationsschutz erst nach bzw. bei der Herstellung oder Inbetriebnahme aktiviert, d.h. die Speicher sind initial oder zumindest einmal schreibbar.

Hardwarebasierter Modifikationsschutz von Speichern: Ein solcher kann realisiert werden durch einen nur lesbarer Speicher, d.h. ein ROM, einen nur einmal schreibbare Speicher (bevorzugte Lösung), d.h. ein OTP (one-time programmable), einen nur mit Licht oder dergleichen löschbarer Speicher, d.h. ein EPROM, einen Speicher, der dann schreibbar ist, wenn an einer bestimmten Leitung ein bestimmtes Potential anliegt, wobei dies nur während der Produktion möglich ist (Leitung nicht herausgeführt), oder einen frei lesbarer Speicher, der aber nur nach Bereitstellen eines Passwortes oder Codes geschrieben werden kann, wie es entsprechend bereits im Absatz "Hardwarebasierter Ausleseschutz von Speichern" beschrieben wurde. Das Passwort oder der Code kann alleine dem Hersteller bekannt sein, oder einer anderen Instanz, welche die Hörgeräteidentitäten verwaltet.

Modifikationsschutz von Speichern durch Versiegelung: Eine Alternative für einen nur lesbaren Speicher ist das algorithmische "Versiegeln" des Speichers (Nicht zu verwechseln mit einer physikalischen Versiegelung). Bei einer Variante des Versiegelns ist der Speicher weiterhin schreibbar, es wird jedoch eine Hashfunktion oder eine Signatur für den Speicher berechnet und an einem sicheren Ort bzw. in einem gesicherten Speicher, insbesondere in einem Trusted Platform Module, abgelegt. Dadurch lässt sich jeder Zeit, insbesondere vor jedem Lesezugriff, durch eine erneute Berechnung der Hashfunktion bzw. Signatur und einem Vergleich mit der im Speicher abgelegten früheren Resultate verifizieren, dass der Speicher nicht modifiziert wurde.

Prozessorhardware: Ein Kryptoprozessor und ein Hauptprozessor können auf demselben Chip implementiert werden. Dies reduziert die Herstellungskosten. Das Hörgerät kann ohne wesentliche Zusatzkosten mit den Sicherheitsfunktionen versehen werden.

Trusted Platform Module: Beim Trusted Platform Module kann es sich im Wesentlichen um einen separaten Chip oder einen separaten Chipsatz handeln, der erst beim Zusammenbau des Hörgerätes mit diesem bzw. dessen Komponenten verbunden wird. Das Trusted Platform Module bzw. seine Funktionalität kann jedoch auch in einen oder mehrere bereits bestehende Hörgerätechips integriert werden, insbesondere in den Chip, auf welchem sich der Hauptprozessor bzw. Kontroller befindet. Die Abkürzung TPM bezeichnet auch einen Standard, insbesondere TPM 1.2 und TPM 2.0. Die Merkmale des Standards, welcher primär für PCs vorgesehen ist, lassen sich auf Hörgeräte übertragen. Der Standard spezifiziert sehr viele Details. Für die Auslegung des Begriffes "Trusted Platform Module" in den Ansprüchen sind diese Details nicht anzuwenden, sondern nur die generischen Grundfunktionen, namentlich das Verschlüsseln und Signieren, die zugehörigen Umkehroperationen, sowie das gesicherte Speichern von mindestens einem Schlüssel. Der Funktionsumfang ist meistens ähnlich wie bei einer Smartcard bzw. Chipkarte. Das Trusted Platform Module kann auch eine Art Betriebssystem bzw. eine Firmware aufweisen, welche vorzugsweise nur mit einem Hardwareeingriff aktualisiert werden kann. Die kryptographischen Algorithmen können in Software und/oder in Hardware realisiert sein. TPMs für PCs werden zum Beispiel von Infineon angeboten.

Auslagerung: Der Speicher im Chip oder in den Chips, welche die Funktionalität des Trusted Platform Module implementieren, kann begrenzt sein, oder es kann aufgrund der verwendeten Chip-Technologie nicht möglich sein dort etwas persistent, d.h. ohne Stromversorgung, zu speichern. In diesem Fall können die gesichert zu speichernden Daten mit einem Auslagerungsschlüssel verschlüsselt und/oder signiert werden und ausserhalb bzw. in anderen weniger gesicherten Speichern bzw. Chips gespeichert werden. Hierfür muss jedoch zumindest der Auslagerungsschlüssel innerhalb, d.h. in dem oder den Trusted Platform Module Chips, gespeichert werden. Da der Auslagerungsschlüssel fix sein kann reicht dafür allerdings ein ROM. Er sollte jedoch von Gerät zu Gerät unterschiedlich sein, so dass sich eine Generierung bei der Herstellung oder ersten Benutzung und Speicherung in einem OTP anbietet. Die Auslagerung kann innerhalb des Hörgerätes erfolgen, insbesondere in den nicht flüchtigen Speicher (NVM) oder eine Speicherkarte (z.B. Mikro-SD). Es ist aber auch eine Auslagerung in ein externes Gerät möglich, insbesondere in ein Smartphone, einen PC oder einen Server bzw. eine Cloud.

Zu schützende Daten: Neben geheimen und privaten Schlüsseln sollten auch andere Daten wie zum Beispiel Passwörter, Passwortzähler, biometrische Daten, das Fitting, Gesundheitsdaten, Logging Daten, Ton- und Bildaufzeichnungen sowie private Daten des Benutzers im Allgemeinen gegen Auslesen und/oder Manipulation gesichert gespeichert werden. Hierfür kann direkt der gesicherte Speicher eines Trusted Platform Module genutzt werden oder die Daten können ausgelagert werden wie im vorhergehenden Absatz "Auslagerung" beschrieben. Eine weitere Alternative ist das Vorsehen eines speziellen Speichers (insbesondere zusätzlich zum TPM), der hardwarebasiert geschützt ist.

Authentifizierung bzw. Authentisierung: Der Benutzer kann sich gegenüber dem Hörgerät, dem Trusted Platform Module oder für die Nutzung bestimmter Funktionen des Hörgerätes wie den Zugriff auf bestimmte Speicher oder Schlüssel mit einem Passwort, mit bestimmten Gesten und/oder mittels Biometrie (Siehe Absatz "Biometrie") authentisieren (In anderen Worten: Er wird vom System authentifiziert bzw. er weist dem System seine Authentizität nach). Bei einer Kombination verschiedener Verfahren, zumindest zwei, spricht man von Multi-Faktor-Authentifizierung. Eine besondere Lösung ist die Zwei-Faktor-Authentifizierung mit einem spracherkannten Passwort und einer Sprechererkennung. Siehe hierzu auch den Absatz "Login".

Passwort: Für fehlgeschlagene Entsperrungsversuche kann es einen Zähler geben. Wie bei SIM-Karten von Telefonen kann es neben dem normalen Passwort (Persönliche Identifikationsnummer, PIN) ein spezielles Passwort (Personal unblocking key, PUK) fürs Zurücksetzen des Zählers geben. Eine Funktion kann das regelmässige Wechseln des Passwortes erzwingen. Unsichere Passworte, weil zu kurz oder zu einfach, können abgelehnt werden. Passwörter können auch vom Hörgerät erzeugt werden. Statt eines Passwortes kann auch ein ganzer Satz oder ein Code (nur Zahlen, dezimal oder binär) vorgesehen werden. Ein binäres Passwort hat den Vorteil, dass es über einen einfachen Wippschalter eigegeben werden kann. Siehe hierzu auch den Absatz "Hörgerätebedienung".

Biometrie: Vorzugsweise wird die Biometrie direkt mit dem Hörgerät durchgeführt. Mit einem Ohrkanalmikrofon können das Gehörgangsecho sowie otoakustische Emissionen gemessen werden, sowohl evozierte als auch spontane (OAE, SOAE, EOAE, TEOAE, SFOAE, DPOAE). Ferner kann eine akustische Sprechererkennung durchgeführt werden. Die Verwendung von Gehörgangsschall zusätzlich oder statt des Aussenschalls bietet eine gute Sicherheit gegen Replay-Angriffe, weil es für einen Aussenstehenden nicht möglich ist den Schall im Gehörgang abzugreifen bzw. mitzuhören. Neben dem Gehörgangsschall kann auch Körperschall mit einem speziellen Mikrofon aufgenommen werden. Gehörgangsmikrofone und Körperschallmikrofone liefern ein Signal, welches vom konventionellen Umgebungsschall abweicht und auch nicht durch eine einfache Modifikation des Umgebungsschalles generiert werden kann. Mit Beschleunigungssensoren und einem Erdmagnetfeldsensor, beides insbesondere im Hörgerät, können Bewegungsmuster, und basierend darauf der Hörgeräteträger erkannt werden. Eine einfache wenn auch ungenaue Form von Biometrie stellt auch eine Hörverlustmessung dar. Ein Fingerabdrucksensor, zum Beispiel eine kapazitive Scannerzeile, kann direkt ins Hörgerät eingebaut werden. Nimmt man für die Biometrie zusätzliche Geräte, wie ein Smartphone hinzu, so ermöglichen sich weitere Verfahren wie zum Beispiel Gesichtserkennung und Iris-Scan. Eine mit Biometrie verwandte Lösung ist das Injizieren eines kleinen RFID-Transponder Chips, wie er von Tierkennzeichnung her bekannt ist. Befindet er sich im Bereich des Ohres, kann er vom Hörgerät induktiv mit Strom versorgt und ausgelesen werden.

Persistente Speicher: Die im vorliegenden Dokument beschriebenen Speicher sollten je nach Verwendung nicht flüchtige bzw. persistente Speicher (NVM/non-volatile-memory) sein. Diese Speicher verlieren ihren Inhalt nicht, wenn das Hörgerät ausgeschaltet wird oder wenn bei einem Wechsel der Hauptbatterie die Stromzuführung gekappt wird. Es gibt dafür verschiedene Technologien. Ein flüchtiger Speicher kann mit einer Pufferbatterie bzw. einem Pufferkondensator versehen werden, welche zumindest die Zeit eines Batteriewechsels überbrückt. Ferner gibt es Flash-EEPROM (electrically erasable programmable read-only memory), wie sie in Speicherkarten verwendet werden. Diese Speicher behalten ihren Inhalt auch ohne Stromversorgung. Sie können jedoch den Nachteil haben langsam zu sein und/oder insbesondere beim Schreiben viel Strom zu brauchen. Es kann daher von Vorteil sein im Betrieb, zum Beispiel beim Einschalten, Daten aus einem solchen Speicher in ein flüchtiges RAM zu transferieren und/oder beim Ausschalten und/oder periodisch wieder persistent zu speichern. Das flüchtige RAM hat hierbei bevorzugt die gleichen Zugriffseinschränkungen wie der zugehörige persistente Speicher (bzw. umgekehrt), wie zum Beispiel ein Passworterfordernis fürs Schreiben und/oder Auslesen. Insbesondere wenn es sich beim persistenten Speicher um einen separaten Chip handelt, kann es vorteilhaft sein, wenn die Daten für die Speicherung verschlüsselt und/oder signiert bzw. versiegelt werden. Dies gilt insbesondere für Schlüssel. Siehe hierzu den Absatz zur "Auslagerung".

Public-Key-Infrastruktur: Für den Betrieb eines asymmetrischen bzw. Public-Key-Kryptosystems ist es erforderlich die öffentlichen Schlüssel der Teilnehmer bzw. der teilnehmenden Geräte gesichert zu verteilen. Es bietet sich an, dass der Hersteller der Hörgeräte oder eine mit ihm assoziierte Instanz die Rolle einer sogenannten Registrierungsstelle und Zertifizierungsstelle übernimmt. Die Teilnehmer, zum Beispiel Fremdanbieter, hinterlegen bei der Registrierungsstelle ihren öffentlichen Schlüssel. Aus diesen werden Zertifikate erzeugt, indem sie mit einem privaten Schlüssel der Zertifizierungsstelle signiert werden. Die Zertifikate werden zum Download über das Internet angeboten. Hörgeräte können heruntergeladene Zertifikate speichern um die erforderlichen Datenübertragungen zu reduzieren. Optional kann es eine Zertifikatssperrliste geben, mit welcher Zertifikate nachträglich für ungültig erklärt werden können. Der öffentlichen Schlüssel der Zertifizierungsstelle bzw. das Wurzelzertifikat kann bei der Herstellung der Hörgeräte in diesen gesichert hinterlegt werden, zum Beispiel in einem gegen Modifikation geschützten, d.h. versiegelten oder nur lesbaren, Speicher. Die öffentlichen Schlüssel der Hörgerät können ebenfalls bei der Herstellung registriert werden, so dass die Zertifikatsdatenbank auch Zertifikate für alle Hörgeräte enthält. Es ist allerdings auch möglich für die Hörgeräte auf eine öffentliche Public-Key-Infrastruktur zurückzugreifen, welche zum Beispiel von regierungsnahen Organisationen angeboten wird, die die Rolle einer Wurzel-Zertifizierungsinstanz übernehmen. Die Registrierung bei einer solchen Stelle kann für Fremdanbieter einfacher sein oder sogar bereits für andere Zwecke erfolgt sein. Die Authentisierung eines Fremdanbieters gegenüber dem Hörgerät würde dann über eine Kette von Zertifikaten erfolgen. Eine Alternative zur hierarchischen Public-Key-Infrastruktur ist ein sogenanntes Netz des Vertrauens (Web of Trust) welches dezentral organisiert ist und auf gegenseitigen Bestätigungen basiert. Siehe hierzu auch den Absatz "Fremdanbieter".

Schutz von Softwaremodulen: Generell möchte man vermeiden, dass Softwaremodule unbefugt modifiziert, eingeschleust oder kopiert werden. Ein einfacher Schutz besteht darin Softwaremodule derart in einem Speicher des Hörgerätes abzulegen, dass sie von aussen nicht ausgelesen werden können. Entsprechende Mechanismen hierfür sind im vorliegenden Dokument in Zusammenhang mit geheimen bzw. privaten Schlüsseln beschrieben. Ferner können Softwaremodule wie im folgenden beschrieben signiert und/oder verschlüsselt werden.

Signierte Softwaremodule: Das Hörgerät verfügt über Mittel (Hardware und/oder Software), die sicherstellen, dass nur signierte Software bzw. Softwaremodule installiert und/oder ausgeführt werden können. Das Signieren kann direkt durch den Hersteller oder eine mit ihm assoziierten Instanz erfolgen. Ferner können weitere Parteien, zum Beispiel Fremdanbieter, mit Zertifikaten zum Signieren ermächtigt werden. Optional wird eine Signatur nur dann erteilt, wenn das Softwaremodul bestimmte Tests besteht und/oder Anforderungen erfüllt, zum Beispiel, was die Fehlerfreiheit, den Ressourcenverbrauch, die Wirksamkeit, die Sicherheit und/oder die Virenfreiheit betrifft. Siehe hierzu auch den Absatz "App Store". Eine Signatur sichert die Integrität und die Authentizität. Sie dient unter anderem dem Schutz vor Malware. Ohne Signaturprüfung könnte ein Angreifer einen Hörgerätebenutzer zum Beinspiel durch ein E-Mail veranlassen ein schädliches Softwaremodul zu installieren, oder ein Angreifer könnte beim an sich gewollten Nachladen eines Softwaremodul dieses abfangen und durch ein modifiziertes schädliches ersetzen. Es ist denkbar im Hörgerät eine Art Quarantänespeicher vorzusehen, in den neue Softwaremodule geladen werden. Erst wenn die Signatur erfolgreich geprüft wurde wird das Modul in den regulären Speicher übertragen. Siehe hierzu auch den Absatz "Virenscanner". Noch besser ist es, wenn die Signaturprüfung in Hardware implementiert ist, zum Beispiel indem der (Haupt-)Prozessor jeweils Befehlssequenzen liest, deren Signatur prüft und erst ausführt, wenn die Prüfung erfolgreich war. Ein einfacher Schutz gegen unbefugtes Mehrfachinstallieren eines Softwaremoduls kann dadurch realisiert werden, dass ein Identifikation des Zielhörgerätes, zum Beispiel eine Seriennummer, mit signiert wurde. Hörgeräte bzw. ihre Betriebssystemkerne führen Code nur aus, wenn die Identifikation im Softwaremodul mit der des Gerätes übereinstimmt.

Verschlüsselte Softwaremodule: Der Hersteller und andere Anbieter von Softwaremodulen geben diese vorzugsweise nur verschlüsselt heraus, und zwar verschlüsselt mit dem öffentlichen Schlüssel des jeweiligen Empfängergerätes. Dies erschwert das Reverse Engineering und insbesondere die Nutzung von Algorithmen durch Konkurrenzfirmen. Ferner können die Softwaremodule nur auf dem Zielhörgerät betrieben werden, da dieses einzig über den privaten Schlüssel zum Entschlüsseln verfügt. Eine Installation auf Fremdgeräten ist damit nicht möglich. Ein Upgrade kann nicht unbefugt mehrfach appliziert werden. Softwaremodule können verschlüsselt und/oder unverschlüsselt im Hörgerät gespeichert werden. Die Entschlüsselung kann einmalig beim Empfang, oder immer wieder erfolgen, zum Beispiel bei jedem Einschalten oder direkt vorm Ausführen eines Codeblocks ("just in time"). Vorzugsweise ist das entschlüsselte Softwaremodul bzw. der entschlüsselte Programmcode, ähnlich wie private Schlüssel, in einem Speicher gespeichert, welcher von aussen nicht ausgelesen werden kann bzw. welcher nur zwecks Ausführung auf dem (Haupt-)Prozessor gelesen werden kann. Es ist für die Speicherung im Hörgerät auch eine Umverschlüsselung möglich, wobei ein vorzugsweise symmetrischer geheimer Speicherschlüssel verwendet wird. Ferner ist eine Architektur möglich, bei der Daten, welche "off-Chip", d.h. ausserhalb des Hauptprozessorchips, zum Beispiel in einem nicht-flüchtigen Speicher (NVM), abgelegt werden, hierfür generell verschlüsselt werden. Siehe hierzu auch den Absatz "Auslagerung".

Beispiele für Softwaremodule: Nachgeladene Module können dem Update bzw. der Reparatur von bereits geladenen Modulen dienen. Sie können jedoch auch ein Upgrade des bestehenden Systems darstellen, zum Beispiel in Form von "Plug-Ins" oder "Add-Ons". Die Funktionalität des Hörgerätes ist so erweiterbar, auch nachdem es zum Hearing Care Professional oder Endkunden ausgeliefert wurde. Nachgeladene Module können dem Primärnutzen dienen, also dem Hören und insbesondere der Schallverarbeitung, zum Beispiel in Form einer Rückkopplungsunterdrückung, Enthallung, Richtwirkung, Frequenzkompression, Störschallunterdrückung und Impulsschallunterdrückung. Nachgeladene Module können auch einem Zusatznutzen dienen, wie zum Beispiel der Gesundheitsüberwachung oder Finanztransaktionen wie bargeldlosem Zahlen und dergleichen. Nachgeladene Module können auch dem Update des Betriebssystems dienen. Eine spezielle Form von Softwaremodul sind Programmierdaten für FPGAs. Ein Update eines Betriebssystemkerns, welcher die Signaturen der Module prüft, ist vorzugsweise nur mit einem Hardwareeingriff möglich, zum Beispiel indem das Gerät zum Hersteller geschickt wird und dieser einen Festwertspeicher (ROM) auswechselt.

Softwaresysteme: Eine bestimmte Lösung für ein Kundenproblem bzw. -bedürfnis kann neben Softwaremodulen auf dem Hörgerät Softwaremodule auf einem externen Computer, insbesondere Smartphone oder PC, umfassen. Letztere Softwaremodule können zunächst ebenfalls signiert und/oder verschlüsselt sein, vom Hörgerät entschlüsselt und/oder geprüft werden und dann auf dem externen Computer installiert werden. Es ist auch denkbar, dass die Lösung weitere Hardwarekomponenten umfasst, wie zum Beispiel ein Fitnessband mit Puls-Sensor.

App Store: Für Softwaremodule kann der Hersteller, eine mit ihm assoziierte Instanz, ein Akustiker oder ein Fremdanbieter eine Art App Store, wie er von Smartphone-Apps her bekannt ist, anbieten, in anderen Worten: einen virtuellen Laden für Softwaremodule. Dieser kann eines oder mehrere der folgenden Merkmale haben: (A) Der Laden ist eine exklusive Stelle für den Bezug von Softwaremodulen; (B) Alle angebotenen Softwaremodule sind signiert; (C) Alle hochgeladene Softwaremodule werden bevor sie im Angebot erscheinen manuell und/oder automatisiert getestet; (D) Der App Store Betreiber entscheidet über die Rechte der Softwaremodule im Kontext des Hörgerätes; (E) Es gibt eine Buchhaltung bzw. Verwaltung von Debitoren und Kreditoren; (F) Gegenüber dem Laden gibt es u.a. folgende Rollen: Produzent, Händler, Verbraucher bzw. Konsument; (G) Guthabenkarten können zum Beispiel beim Akustiker erworben werden; (H) Der Laden ist im Wesentlichen eine Web-Site bzw. ein Server; (I) Es ist auch ein virtuelles "Shop-in-Shop"-Prinzip denkbar, bei dem die Web-Site in die Web-Site eines Akustiker eingebettet ist, oder umgekehrt.

Fremdanbieter: Wie bereits erwähnt, können neben dem Hersteller der Hörgeräte weitere Anbieter zum Bereitstellen von Softwaremodulen autorisiert werden. Dies kann mit Zertifikaten erfolgen, welche die öffentlichen Schlüssel eines Fremdanbieters beglaubigen. Der Fremdanbieter signiert die von ihm angebotenen Softwaremodule mit seinem privatem Schlüssel. Das Hörgerät prüft die Signatur mit dem Zertifikat. Bei den Fremdanbietern kann es sich unter anderem um Firmen aus folgenden Bereichen handeln: Hörakustik, Finanzindustrie, Rüstungsindustrie, Unterhaltungselektronik, Musikindustrie, Sport und Gesundheitswesen.

Manifest und Rechtevergabe: Generell gilt für nachgeladene Softwaremodule das Prinzip der Isolation, d.h. sie können zum Beispiel nur auf einen bzw. ihren Teil des Hörgerätspeichers zugreifen und haben beim Prozessor nur bestimmte Zeitschlitze oder Auslastungsprozente zur Verfügung. Es können allerdings Rechte vergeben werden bzw. erforderlich sein, wie beim Manifest einer Smartphone-App. Rechte können beim Signieren des Softwaremoduls durch den Hersteller vergeben oder eingeschränkt werden. Ferner kann für die Vergabe von Rechten bei der Installation des Softwaremoduls eine Benutzerinteraktion erforderlich sein. Zudem können beim Hörgerät Systemeinstellungen vorgesehen sein, welche, insbesondere global, nachgeladenen Softwaremodulen bestimmte Rechte einräumen oder verweigern.

Beispiele für Rechte: Folgende Rechte können unter anderem vorgesehen sein: (A) Verarbeiten eines Audiostreams, welcher Teil des Pfades Mikrofon-Hörer ist; (B) Nachladen, Ausführen und/oder Terminieren weiterer Softwaremodule; (C) Zugriff auf andere/bestimmte Speicher des Hörgerätes; (D) Zugriff auf die Laustärkeeinstellung; (E) Zugriff auf alle/ausgewählte Anpassparameter (Fitting); (F) Zugriff auf den nichtflüchtigen Speicher (Komplett oder nur Lesen); (G) Zugriff auf die kryptographischen Funktionen; (H) Zugriff auf persönliche Daten (Name des Hörgeräteträgers etc.); (I) Zugriff auf Sensordaten (Mikrofone, GPS, Beschleunigung, Puls, Magnetfeld, Licht, etc.); (J) Ansteuern einer LED am Hörgerät; (K) Wiedergabe von Signalschallen und Sprachausgabe; (L) Wiedergabe von Schall, welcher lauter ist als der MPO (Schalldruckbegrenzung); (M) Kommunikation mit einem Smartphone, welches zuvor mit dem Hörgerät gekoppelt wurde; (N) Kommunikation mit einem Kontrahörgerät; (O) Koppelung ("Pairing") des Hörgerätes mit anderen Geräten; (P) Eine maximale anteilige Prozessorauslastung; (Q) Verursachung eines bestimmten maximalen Stromverbrauch; (R) Abbuchungen von einem Guthaben des Hörgeräteträgers (zum Beispiel Prepaid).

Ortsbezogene Rechte: Rechte, wie der Zugriff auf Schlüssel, die Nutzung eines Trusted Platform Modules oder des Hörgerätes überhaupt, können ortsbezogen sein, zum Beispiel basierend auf einem GPS Empfänger im Hörgerät oder Smartphone oder basierend auf verfügbaren WLANs. So kann zum Beispiel eine E-Banking Funktion nur freigeschaltet werden, wenn sich der Benutzer zuhause befindet.

Zeitbezogene Rechte: Zusätzliche Softwaremodule können mit einem Ablaufdatum, einer maximalen Benutzungszeit oder einem anderen Ablaufkriterium versehen werden. Dies ist für Geschäftsmodelle erforderlich, bei denen der Kunde für die Benutzung bzw. Benutzungszeit zahlt oder ein zeitbegrenztes Abonnement kauf. Das Ablaufkriterium ist vorzugsweise mit signiert und kann daher nicht geändert werden ohne die Signatur ungültig zu machen. Die Überprüfung des Ablaufdatums erfolgt vorzugsweise, ähnlich wie die Überprüfung der Signatur, direkt durch Hardware, oder durch einen nicht veränderbaren bzw. nicht überschreibbaren Betriebssystemkern. Hierbei gibt es folgende Implementierungsoptionen, welche auch miteinander kombiniert werden können: (A) Das Hörgerät hat eine "Real-Time Clock" d.h. eine echte Uhrzeit bzw. Datums-Bereitstellung. Die Uhrzeit bzw. das Datum kann entweder direkt am Hörgerät eingestellt werden, oder über eine Synchronisierung mit einem Smartphone oder Fitting-Computer. Eine etwas exotischere Variante wäre ein Funkuhrempfänger im Hörgerät; (B) Das Hörgerät kann auch von einem vertrauten Server, insbesondere mittels eines Challenge-Response-Verfahrens, eine signierte Uhrzeit abrufen; (C) Das Hörgerät misst die eigene akkumulierte Einschaltzeit; (D) Das Hörgerät misst die akkumulierte Verwendungszeit des zusätzlichen Softwaremoduls. Das Softwaremodule kann so zum Beispiel für 300 Stunden freigegeben werden; (E) Regelmässig, zum Beispiel bei jedem Laden oder Einschalten oder auch während des Betriebes für eine feiner granulare Zeitmessungen, muss eine Autorisierung aus dem Internet bzw. vom einem Server des Herstellers geholt werden. Der Hersteller kann so eine Software im Wesentlichen jederzeit abschalten, unter anderem wenn eine Abonnementsgebühr nicht entrichtet wird oder wenn ein Hörgerät als gestohlen gemeldet wurde. Zertifikate, welche bei der Prüfung der Signatur zum Einsatz kommen können zeitlich begrenzt sein. Es kann eine Zertifikatssperrliste geführt werden. Siehe hierzu auch den Absatz "Public-Key-Infrastruktur".

Register für Softwaremodule: Für nachgeladene Softwaremodule kann wie bei einem Windows-PC im Hörgerät bzw. vom Hörgerätebetriebssystem ein Register ("Registry") vorgesehen sein. Dieses Register bzw. diese Registrierdatenbank kann unter anderem für jedes Softwaremodul folgende Daten enthalten: (A) Hersteller des Softwaremodules, sowie sein Zertifikat; (B) Installationsdatum/-zeit, Benutzer und/oder Gerät, welche die Installation ausgelöst haben; (C) Ablaufdatum bei Softwaremodule mit zeitlicher Begrenzung; (D) Internetadresse für den Bezug von Upgrades; (E) Manifest bzw. Rechte des Softwaremoduls; (F) Nutzungsabhängige Zahlungserfordernisse (Pay-Per-Use, Pay-Per-Time); (G) Aktionen, welche für die Deinstallation des Moduls erforderlich sind.

Virenscanner: Alternativ oder zusätzlich zur Signierung der Software ist es möglich im Hörgerät wie bei einem PC einen "Virenscanner" vorzusehen, der Softwaremodule vor der Ausführung auf verdächtige Operationen hin untersucht, wie zum Beispiel Code für das Infizieren anderer Softwaremodule oder Code, welcher verdächtige Internetadressen enthält oder Telefonanrufe auslöst. Bekannte Viren bzw. Virensignaturen können von einer gesicherten Datenbank abgerufen werden. Neben Softwaremodulen für das Hörgerät können auch Softwaremodule für einen externen Computer (PC/Smartphone) auf Viren untersucht werden.

Sicherheitstoken für Akustiker: Eine Anwendung des erfindungsgemässen Hörgerätes besteht darin als Sicherheitstoken (Security-Token) für einen Akustiker (Hearing Care Professional, kurz HCP) zu dienen. Die Programmierung eines solchen HCP-Tokens erfolgt vorzugsweise beim Hersteller. Für ein solches HCP-Token sind folgende Anwendungen denkbar: (A) Fitting von Hörgeräten nur mit HCP-Token; (B) Pairings zwischen Hörgeräten oder mit Zubehörgeräten nur mit HCP-Token; (C) Upgrade/Updates von Hörgeräten nur mit HCP-Token; (D) Benutzung der Fitting-Software nur mit HCP-Token; (E) Bestellungen von Hardware, Software oder Diensten des Herstellers nur mit HCP-Token; (F) Es ist ferner möglich, Hörgeräte so zu gestalten, dass sie nur Fitting-Befehle akzeptiert, welche mit einem HCP-Token signiert wurden. Es kann erforderlich sein, dass ein HCP-Token vom Hersteller mit einem Zertifikat beglaubigt wird. Die normale Hörgerätefunktion wird bei dem HCP-Token nicht benutzt. Die Lösung hat den Vorteil, einfach und kostengünstig zu sein, da der Hörgerätehersteller dabei keine zusätzliche Hardware einkaufen muss, und für die Schnittstelle zwischen HCP-Token und Fitting-Software keine besonderen Vorkehrungen erforderlich sind, da sie von den Hörgeräten her schon existiert.

Seitenkanalangriffe: Das Hörgerät kann gegen sogenannte Seitenkanalangriffe geschützt sein. Die Stromversorgung kann durch Kondensatoren geglättet sein. Elektromagnetische Abstrahlung kann durch eine Abschirmung verhindert werden. Die Software kann so implementiert sein, dass nur sporadisch Nutzberechnungen ausgeführt werden, während die meiste Zeit ein Hintergrundprozess läuft, der dazu dient die eigentliche elektromagnetische Abstrahlung, den eigentlichen Stromverbrauch sowie den eigentlichen Rechenzeitbedarf zu verschleiern. Das Hörgerät oder zumindest die sicherheitsrelevanten Bauteile (wie ein TPM) sind vorzugsweise auch "tamper-proof", d.h. gegen physische Manipulationen gesichert. So kann die Schaltung vergossen sein um zu vermeiden, dass elektrische Signale durch Kontakt abgegriffen werden. Chips können derart verpackt sein, dass sie beim Öffnen kaputt gehen und die gespeicherten Schlüssel zerstört werden.

Reparatur und Entsorgung: Das Hörgerät bzw. Hörsystem kann hierfür spezielle Vorkehrungen haben. Im Fall Reparatur kann es vorteilhaft sein alle Schlüssel und Sicherheitsfunktionen oder das Trusted Platform Module temporär zu sperren bzw. nach der Reparatur wieder zu entsperren, zum Beispiel mit einem Passwort. Für die Entsorgung kann ein universelles Löschen vorgesehen sein, dass alle Schlüssel und Daten, vorzugsweise physikalisch, löscht, zum Beispiel durch mehrfaches Überschreiben mit Zufallsdaten. Ferner kann das Trusted Platform Modul eine irreversible Sperrfunktion vorsehen.

Cloud: Der Hersteller oder eine mit ihm assoziierte Instanz kann einen Server bzw. eine Cloud betreiben, die folgende teilweise bereits erwähnte Dienste bereitstellt: (A) Anbieten von Daten zum Download: (A1) Dokumentation der oben beschriebenen öffentlichen Schnittstelle für Dienste, (A2) Open-Source Software, (A3) Signierte Software (Updates, Upgrades etc.), (A4) Öffentlicher Schlüssel bzw. Wurzelzertifikat des Herstellers; (B) Verwaltung von Schlüsseln: (B1) Generieren von Schlüsselpaaren, (B2) Abfrage von öffentliche Schlüsseln von Hörgeräten basieren auf einer Seriennummer oder auf Kundendaten; (C) Verwaltung von Zertifikaten (zum Beispiel welche Signaturen anderer Softwareanbieter beglaubigen), (C1) Hinzufügen von Zertifikaten, (C2) Annullieren von Beglaubigungen bzw. Zertifikaten, Führen einer Black-List, (C3) Abfrage der gültigen Zertifikate, (C4) Verwaltung von Zertifikatshierarchien; (D) Verwaltung von Endkundenkonten und Akustikerkonten, (D1) Hinzufügen, (D2) Ändern, (D3) Löschen, (D4) Erfassen von Zahlungsinformationen; (E) Online-Shop: (E1) Eigene Hörgeräte-Hardware, Hörgeräte-Software, Hörgeräte-Dienste, (E2) Hörgeräte-Hardware, Hörgeräte-Software, Hörgeräte-Dienste von anderen Anbietern, (E3) Versand, Kasse, Rechnungstellung, Mahnung etc.; (F) Indirekter Zugriff auf Hörgeräte bzw. Zugriff das oben beschriebene öffentliche Interface über den Server; (G) Backup von Daten auf den Hörgeräten.

Open Source: Teile der Software eines Hörgerätes oder eines Hörsystems können als Open Source Software zur Verfügung gestellt werden. Dabei kann es sich insbesondere handeln um Schallverarbeitungsalgorithmen, eine Fernbedienungs-App, eine Selbst-Fitting-App (insbesondere mit in-situ Audiogrammessung) sowie Software zum Ver- bzw. Entschlüsselung von Dateien auf einem PC unter Zuhilfenahme der Sicherheitsfunktionen des Hörgerätes.

Verwendungen eines erfindungsgemässen Hörgerätes mit Public-Key Sicherheitsfunktionen: Es gibt folgende Anwendungen, welche zum Teil weiter unten noch genauer erläutert sind: (A) Verschlüsseltes Telefonieren; (B) Ver- bzw. Entschlüsseln von E-Mails und Dateien; (C) Signieren bzw. Signaturprüfung von E-Mails und Dateien; (D) Trusted Platform Module für einen Computer; (E) Login an diversen Geräten; (F) Sichere Finanztransaktionen; (G) Autorisierung beim elektronischen Wählen und Abstimmen; (H) Digitale Rechteverwaltung für Medien; (I) Ersatz für elektronische Fussfesseln im Strafvollzug; (J) Speicherung von Gesundheitsdaten und insbesondere einer elektronischen Gesundheitsakte; (K) Telemedizin und Gesundheitsüberwachung.

Mehrfachverwendung: Wenn das Hörgerät zum Beispiel sowohl zum verschlüsselten Telefonieren, als auch für E-Mail Verschlüsselung verwendet wird, so ergibt sich daraus die Synergie, dass die erforderlichen Schlüssel nicht mehrfach verwaltet werden müssen. Fallweise kann derselbe Schlüssel für zweierlei Kommunikationsarten verwendet werden.

Verschlüsseltes Telefonieren: Diese Verwendung ist insbesondere für Politiker, für die Polizei oder fürs Militär geeignet. Die Datenübertragung kann übers öffentliche Telefonnetz, aber auch über andere Netze oder Funkanlagen erfolgen. Bei Verwendung eines Smartphones sendet dieses die Schalldaten über Bluetooth ans Hörgerät, dort werden sie ver- oder entschlüsselt und ans Smartphone zurückübertragen. Ein derartiges Vorgehen hat den Vorteil, dass der Schlüssel nicht im Smartphone gespeichert wird, wo er leicht ausgelesen werden kann. Der Schall kann allerdings auch direkt vom Hörgerät aufgenommen bzw. wiedergegeben werden, so dass nie Schalldaten unverschlüsselt ausserhalb des Hörgerätes zu finden sind. Mit Biometrie kann sichergestellt werden, dass ein gestohlenes bzw. entwendetes Hörgerät nicht unbefugt zum Entschlüsseln verwendet werden kann.

Verschlüsselter E-Mail-Verkehr: Die E-Mail-Programme laufen auf einem externen Computer, zum Beispiel einem Desktop-PC, einem Notebook, einem Tablet oder einem Smartphone. Auf der Senderseite werden die zu sendenden Daten vor dem Senden vom externen Computer ans Hörgerät übertragen, dort verschlüsselt und wieder zurück an den externen Computer übertagen. Auf der Empfängerseite geschieht das Gleiche analog. Die empfangenen Daten werden vom externen Computer ans Hörgerät übertragen, dort entschlüsselt und wieder zurück an den externen Computer übertragen. Dies hat den Vorteil, dass in keinem der externen Computer dabei ein geheimer Schlüssel vorliegen muss. Der Klartext im externen Computer lässt sich allerdings nur vermeiden, wenn die Eingabe des Textes über Spracherkennung und die Ausgabe über Sprachsynthese direkt im Hörgerät erfolgt.

Trusted Platform Module für einen Computer: Das erfindungsgemässe Hörgerät kann die Funktion eines Trusted Platform Modules für einen externen Computer, wie einen Desktop-PC, Notebook, Tablet oder Smartphone übernehmen. Für einen Kommunikationspartner wie einem Server kann das System aus Computer und Hörgerät so erscheinen, als handelte es sich um ein konventionelles System aus Computer und fest eingebautem Trusted Platform Module gemäss Standard. So kann zum Beispiel Speicher des Computers mithilfe des Hörgerätes versiegelt werde.

Login: Das erfindungsgemässe Hörgerät kann zur Realisierung eines sogenannten "Single Sign-on"-Systems benutzt werden. Der Benutzer authentifiziert sich gegenüber dem Hörgerät, zum Beispiel durch Biometrie. Er schaltet dadurch nicht nur die Hörgerätefunktionalität frei (ein Erfordernis, welches dem Diebstahlschutz dienen kann) sondern auch die Funktionalität diverser anderer Geräte und Dienste, wie zum Beispiel eines Personal Computers, eines mobilen Telefons, eines Schliesssystem (zum Beispiel eines Autos) oder eines e-Banking Systems. Für weniger sicherheitsrelevante Verwendungen kann auch der blosse Besitz bzw. physikalische Nähe des Hörgerätes auseichend sein, d.h. ohne Password und Biometrie.

Gesicherte Finanztransaktionen: Autorisieren von Bank- bzw. Börsentransaktionen sowie Zahlungen in Geschäften als Ersatz für Bargeld. Für Sicherheit im Bereich Finanzen gibt es spezielle Richtlinien, welche vom Fachmann entsprechend angewendet werden.

Digitale Rechteverwaltung: Die Erfindung kann dazu genutzt werden das unbefugte Nutzen oder Kopieren von digitalen Medien wie Film- und Tonaufnahmen zu verhindern. So können zum Beispiel Musik-Downloads mit dem öffentlichen Schlüssel des Zielhörgerätes verschlüsselt werden, so dass sie nur auf diesem abspielbar sind, analog zu den oben beschriebenen verschlüsselten Softwaremodulen. Audiostreams, zum Beispiel bei einem Konzert, können auf eine bestimmte Empfängergruppe eingeschränkt werden, zum Beispiel auf Menschen mit einem Hörverlust, und/oder Personen, die eine spezielle Berechtigung dafür erworben haben.

Strafvollzug: Das erfindungsgemässe Hörgerät kann ausgestattet mit einem GPS-Empfänger eine elektronische Fussfessel ersetzen. Es prüft mittels Biometrie (zum Beispiel basierend auf otoakustische Emissionen), ob es von der richtigen Person getragen wird. Es sendet periodisch den Ort und optional auch die Uhrzeit signiert an einen Zentrale oder reagiert auf Anfragen von einer solchen.

Gesundheitsdaten: Verschiedene gesetzliche Bestimmungen aber auch praktische und ethische Erwägungen erfordern es, dass Gesundheitsinformationen vertraulich behandelt werden. Bei einer Überwachung von Gesundheit und Vitalstatus könne die Sensordaten vom Hörgerät verschlüsselt und signiert werden, so dass nur der zuständige Arzt die Daten im Klartext erhält und Gewissheit hat, das sie authentisch sind. Ferner kann das Hörgerät zur sicheren Speicherung einer persönlichen Gesundheitsakte benutzt werden.

Die im vorliegenden Text genannten Merkmale lassen sich in vielfältiger Weise kombinieren. Die genannten Kombinationen dienen als Beispiel.

## Patentansprüche

1. Hörgerät (1) mit Public-Key Sicherheitsfunktionen, **dadurch gekennzeichnet, dass** ein Teil desselben zur Bereitstellung der Funktionalität eines Trusted Platform Module (6) ausgebildet ist.

2. Hörgerät (1) gemäss Anspruch 1, wobei das Hörgerät (1) zur Bereitstellung der Funktionalität eines Trusted Platform Module (6) für einen externen Computer ausgebildet ist.

3. Hörgerät (1) gemäss einem der vorhergehenden Ansprüche, wobei das Hörgerät einen Speicher (11) aufweist, in welchem Computerprogrammcode gespeichert ist, der ausgebildet ist zum Implementieren von Algorithmen zum Verschlüsseln, zum Entschlüsseln, zum Signieren, zur Signaturüberprüfung, und zur Generierung von Schlüsselpaaren umfassend einen öffentlichen Schlüssel (13) und einen privaten Schlüssel (9).

4. Hörgerät (1) gemäss einem der vorhergehenden Ansprüche, wobei das Hörgerät ferner ein Mikrofon (2), einen Hörer (3), einen Hauptprozessor (5), einen Kryptoprozessor (7) sowie einen gesicherten Speicher (8) aufweist, in welchem ein privater Schlüssel (9) speicherbar ist, wobei das Hörgerät (1) bezüglich seiner Architektur derart gestaltet ist, dass in einem Normalbetriebsmodus der Kryptoprozessor (7) Daten aus dem gesicherten Speicher (8) lesen kann, der Hauptprozessor (5) hingegen nicht.

5. Hörgerät (1) gemäss einem der vorhergehenden Ansprüche, welches mindestens eine der folgenden Sicherheitskomponenten (6, 11, 7) aufweist und derart gestaltet ist, dass beim Benutzen des Hörgerätes (1) zur Hörverlustkompensation diese mindestens eine der folgenden Sicherheitskomponenten (6, 11, 7) im und/oder am Ohr angeordnet ist:
• Der Teil, der die Funktionalität eines Trusted Platform Module (6) beitstellt;
• Der Speicher (11) in welchem Computerprogrammcode gespeichert ist;
• Der Kryptoprozessor (7);

6. Hörgerät (1) gemäss einem der vorhergehenden Ansprüche, welches einen hardwarebasierten nicht-pseudo Zufallsgenerator (10) aufweist.

7. Hörgerät (1) gemäss einem der vorhergehenden Ansprüche, wobei zumindest ein Teil eines Betriebssystems des Hörgerätes (1) zum Schutz gegen Manipulation algorithmisch versiegelt ist.

8. Hörgerät (1) gemäss einem der vorhergehenden Ansprüche, wobei ein öffentlicher Schlüssel (14) einer vertrauten Instanz, in einem nur lesbaren und/oder in einem algorithmisch versiegelten Speicher (12) des Hörgerätes (1) gespeichert ist.

9. Hörgerät (1) gemäss einem der vorhergehenden Ansprüche, welches Mittel zur Durchführung von Biometrie aufweist.

10. Hörgerät (1) gemäss Anspruch 9, wobei die Mittel zur Durchführung von Biometrie ein Mittel zur Erkennung eines Sprechers und/oder Mittel zum Messen otoakustischer Emissionen aufweisen, wobei die Mittel zur Erkennung eines Sprechers bzw. die Mittel zum Messen otoakustischer Emissionen ein Ohrkanalmikrofon aufweisen.

11. Hörgerät (1) gemäss einem der vorhergehenden Ansprüche, wobei Mittel zur Multi-Faktor-Authentisierung des Benutzers (100) gegenüber dem Hörgerät (1) vorgesehen sind.

12. Public-Key-System mit einer Public-Key-Infrastruktur umfassend eine Zertifizierungsstelle (16), **dadurch gekennzeichnet, dass** es zumindest ein Hörgerät (1) gemäss einem der vorhergehenden Ansprüche aufweist, wobei die Zertifizierungsstelle (16) mit einem Hersteller (16) des Hörgerätes (1) assoziiert ist und eine Datenbank mit öffentlichen Schlüsseln (13, 21) bereitstellt.

13. Kommunikationssystem zum verschlüsselten Telefonieren, umfassend unter anderem ein Telefon (26), **dadurch gekennzeichnet, dass** es zumindest ein Hörgerät (1) gemäss einem der Ansprüche 1 bis 11 aufweist, wobei eine Kommunikation zwischen Telefon (26) und Hörgerät (1) über Bluetooth vorgesehen ist und eine Verschlüsselung sowie Entschlüsselung von Schalldaten im Hörgerät (1) vorgesehen ist.

14. Kommunikationssystem zum verschlüsselten Austausch von Daten, insbesondere E-Mail-Nachrichten, **dadurch gekennzeichnet, dass** es ein Hörgerät (1) gemäss einem der Ansprüche 1 bis 11 aufweist und für ein Verschlüsseln und Entschlüsseln der Daten im Hörgerät (1) ausgebildet ist.

15. Computersystem umfassend einen Computer, **dadurch gekennzeichnet, dass** es ferner ein Hörgerät (1) gemäss einem der Ansprüche 1 bis 11 aufweist, wobei das Computersystem für eine Authentisierung eines Benutzers gegenüber dem Computer mittels des Hörgerätes (1) ausgebildet ist.
